# EUROPEAN PATENT APPLICATION

(11) **EP 4 606 562 A1**
(43) Date of publication of application: **27.08.2025**
(21) Application number: 23900090.4
(22) Date of filing: 08.12.2023
(51) Int. Cl.: B32B 3/08, B32B 7/12, B32B 17/10, B32B 27/30, B32B 7/023, B32B 9/00, B32B 9/04, B32B 15/04, B32B 33/00, B60J 1/00, B60J 1/02, C03C 27/12

(54) **VEHICLE WINDOW GLASS AND VEHICLE**

(30) Priority: 09.12.2022 CN 202211579812
(71) Applicant: Fuyao Glass Industry Group Co., Ltd., Fuqing, Fujian 350300 (CN)
(72) Inventor: SHANG, Guicai, Fuzhou, Fujian 350300 (CN); CHEN, Xinghao, Fuzhou, Fujian 350300 (CN); TAO, Juan, Fuzhou, Fujian 350300 (CN); KE, Cheng, Fuzhou, Fujian 350300 (CN)
(74) Representative: Mewburn Ellis LLP
(86) International application number: PCT/CN2023/137431
(87) International publication number: WO 2024/120522

(57) **Abstract**

A vehicle window glass and a vehicle is provided. The vehicle window glass includes a laminated glass and an information collection region. The laminated glass includes an outer glass pane, an intermediate layer, and an inner glass pane. The intermediate layer is sandwiched between the outer glass pane and the inner glass pane. The outer glass pane has a first surface and a second surface opposite to the first surface, and the second surface faces the intermediate layer. The inner glass pane has a third surface and a fourth surface opposite to the second surface, and the third surface faces the intermediate layer. An anti-reflection film is disposed on the fourth surface of the inner glass pane, and in a thickness direction of the laminated glass, a projection of the anti-reflection film on the information collection region covers the information collection region. By providing an anti-reflection film in an information collection region, the vehicle window glass can have an increased transmittance for infrared light in a wavelength range of 900 nm to 1000 nm, thereby realizing high-precision measurement by 905nm lidar, and meeting the practical application requirements of 905nm lidar in the field of autonomous driving.

## Description

### CROSS-REFERENCE TO RELATED APPLICATION(S)

This application claims priority to Chinese Patent Application No. 202211579812.7, filed with the China National Intellectual Property Administration on December 9, 2022 and entitled "VEHICLE WINDOW GLASS AND VEHICLE", the entire disclosure of which is hereby incorporated by reference.

### TECHNICAL FIELD

This disclosure relates to technical field of glass products, in particular a vehicle window glass and a vehicle.

### BACKGROUND

The intelligence and networking of vehicles are main directions of future development, and autonomous driving has also become a main direction of vehicle development. Information collection systems installed inside vehicles are gradually widely used in autonomous driving modes of vehicles to improve safety performance and comfort. The information collection system is usually installed on the inside of the vehicle window glass. Currently, one of mainstream choices for information collection systems is 905nm lidar. 905nm lidar uses infrared laser with a wavelength of 905nm to collect information. By emitting infrared laser and receiving infrared laser reflected by the target object, functions such as ranging and speed measurement are realized. Therefore, the vehicle window glass is crucial for transmittance of infrared light with a wavelength of 905nm. However, at present, the vehicle window glass hinders the transmission of infrared light to a certain extent, so that the transmittance of lidar for infrared light cannot meet the needs of autonomous driving for high-precision detection.

### SUMMARY

The present disclosure is to provide a vehicle window glass and a vehicle. When the vehicle window glass of the present disclosure is applied to the vehicle, the usage requirement of autonomous driving of the vehicle for high-precision detection when 905 nm lidar is installed in the vehicle.

In a first aspect of the present disclosure, a vehicle window glass is provided. The vehicle window glass includes a laminated glass and an information collection region. The laminated glass includes an outer glass pane, an intermediate layer, and an inner glass pane. The intermediate layer is sandwiched between the outer glass pane and the inner glass pane. The outer glass pane has a first surface and a second surface opposite to the first surface, and the second surface faces the intermediate layer. The inner glass pane has a third surface and a fourth surface opposite to the second surface, and the third surface faces the intermediate layer. An anti-reflection film is disposed on the fourth surface of the inner glass pane. In a thickness direction of the laminated glass, a projection of the anti-reflection film on the information collection region covers the information collection region. The anti-reflection film includes multiple high refractive index layers and multiple low refractive index layers which are stacked, one low refractive index layer is stacked between every two adjacent high refractive index layers, and one high refractive index layer is stacked between every two adjacent low refractive index layers. A high refractive index layer is in contact with the fourth surface of the inner glass pane. A number of film layers of the anti-reflection film is an even number and greater than or equal to 8.

It can be understood that an anti-reflection film is disposed in the information collection region of the laminated glass, and the anti-reflection film is formed by alternately laminating a high refractive index layer and a low refractive index layer. Infrared light will be reflected at the contact interface from the low refractive index layer to the high refractive index layer, and multiple reflections realize surface anti-reflection and glare reduction. As such, when the information collection system inside the vehicle emits and/or receives infrared light, the anti-reflection film can greatly reduce the reflection of infrared light in the information collection region of the laminated glass, so that the information collection region has a high transmittance for the infrared light compared with other regions on the laminated glass, thereby satisfying the requirement of the autonomous driving mode of the vehicle for infrared light transmission.

In a possible embodiment, as measured from one side of the first surface, a reflected color of the information collection region for visible light has a value of *L* of 84 to 92, a value of *a* of 7 to 11, and a value of *b* of 33-40. The value of *L* denotes a lightness value, the value of *a* denotes a redness-greenness chromaticity value, and the value of *b* denotes a blueness-yellowness chromaticity value.

In a possible embodiment, a total thickness of the anti-reflection film is 400 nm to 2500 nm.

In a possible embodiment, each of the multiple high refractive index layers has a thickness of 20 nm to 100 nm.

In a possible embodiment, in the thickness direction of the laminated glass, the multiple low refractive index layers except a low refractive index layer farthest from the fourth surface of the inner glass pane each have a thickness of 85 nm to 150nm.

In a possible embodiment, a total thickness of the multiple low refractive index layers is 400 nm to 1700 nm.

In a possible embodiment, a ratio of a total thickness of the multiple high refractive index layers to the total thickness of the multiple low refractive index layers is 0.1 to 0.4.

In a possible embodiment, the multiple high refractive index layers include a high refractive index layer with a largest thickness, the multiple low refractive index layers include a low refractive index layer with a smallest thickness, and the low refractive index layer with the smallest thickness has a thickness greater than 1.2 times of that of the high refractive index layer with the largest thickness.

In a possible embodiment, a thickness of any low refractive index layer is greater than 1.5 times of that of any adjacent high refractive index layer.

In a possible embodiment, the multiple high refractive index layers each have a refractive index of 1.9 to 3.5, the multiple low refractive index layers each have a refractive index of 1.4 to 1.9, and a difference between a refractive index of a high refractive index layer and a refractive index of a low refractive index layer adjacent to the high refractive index is greater than or equal to 0.3.

In a possible embodiment, a material of each of the multiple high refractive index layers includes at least one member selected from the group consisting of Si, FeOₓ, NbOₓ, SiNₓ, ZrOₓ, TiOₓ, TiNₓ, MoOₓ, and TaOₓ, and a material of each of the multiple low refractive index layers includes at least one member selected from the group SiOₓ, MgFₓ, AlOₓ, and AlSiOₓ.

In a possible embodiment, in the thickness direction of the laminated glass, a material of a low refractive index layer farthest away from the fourth surface of the inner glass pane is an oxide, and a thickness of the low refractive index layer farthest away from the fourth surface of the inner glass pane is greater than 200 nm.

In a possible embodiment, the information collection region has a transmittance greater than or equal to 75% for infrared light in a wavelength range of 900 nm to 1000 nm and incident at an incident angle of 60° to 70°.

In a possible embodiment, at least one of the outer glass pane or the inner glass pane has a transmittance of at least 91% for light in a wavelength range of 850 nm to1550 nm.

In a possible embodiment, the anti-reflection film is deposited directly on the fourth surface of the inner glass pane.

In a possible embodiment, the anti-reflection film is adhered to the fourth surface of the inner glass pane through a substrate.

In a possible embodiment, the vehicle window glass further includes a heat insulation film. The heat insulation film is disposed on the second surface of the outer glass pane and/or the third surface of the inner glass pane, avoiding the information collection region of the vehicle window glass.

In a possible embodiment, the vehicle window glass further includes a shielding layer. The shielding layer is disposed on a periphery of the second surface of the outer glass pane and/or a periphery of the fourth surface of the inner glass pane, avoiding the information collection region of the vehicle window glass.

In a second aspect of the present disclosure, a vehicle is provided. The vehicle includes a vehicle body and a vehicle window glass described above, and the vehicle window glass is connected to the vehicle body.

In a possible embodiment, the vehicle further includes an information collection system. The information collection system is disposed inside the vehicle, and signals emitted and/or received by the information collection system all pass through the information collection region of the vehicle window glass.

The present disclosure provides a vehicle window glass and a vehicle. By providing an anti-reflection film in an information collection region, the vehicle window glass can have an increased transmittance for infrared light in a wavelength range of 900 nm to 1000 nm, thereby realizing high-precision measurement by 905nm lidar, and meeting the practical application requirements of 905nm lidar in the field of autonomous driving.

### BRIEF DESCRIPTION OF THE DRAWINGS

FIG. 1 is a schematic structural view of a vehicle provided in an embodiment of the present disclosure.
FIG. 2 is a schematic cross-sectional view of a vehicle window glass illustrated in FIG. 1, taken along a thickness direction.
FIG. 3 is a schematic planar structural view of the vehicle window glass illustrated in FIG. 2, in a direction perpendicular to the thickness direction.
FIG. 4 is a schematic structural view of an anti-reflection film of the vehicle window glass illustrated in FIG. 2 in a first embodiment.
FIG. 5 is a structural schematic view of an anti-reflection film of the vehicle window glass illustrated in FIG. 2 in a second embodiment.
FIG. 6 is a schematic cross-sectional view of a heat insulation film and a shielding layer of the vehicle window glass illustrated in FIG. 2.

### DETAILED DESCRIPTION

The following will clearly and completely describe technical solutions of embodiments of the present disclosure with reference to the accompanying drawings. Apparently, embodiments described herein are merely some embodiments, rather than all embodiments. Based on the embodiments of the present disclosure, all other embodiments obtained by those of ordinary skill in the art without creative effort shall fall within the protection scope of the present disclosure.

The intelligent driving and networking of vehicles are the main directions of future development. Generally, an information collection system is installed on the inner side of the vehicle window glass to realize intelligent driving of vehicles. Currently, one of the mainstream choices for information collection systems is 905nm lidar. 905nm lidar uses an infrared laser with a wavelength of 905nm to collect information. A laser beam is emitted into the surrounding three-dimensional space as a detection signal, the laser beam irradiates an object in the surrounding space and is reflected to be returned as an echo signal. The lidar compares the received echo signal with the emitted detection signal to obtain relevant information such as distance and speed of the surrounding objects. Therefore, it is necessary for the vehicle window glass to have a high transmittance for infrared light with a wavelength of 905nm to ensure high-quality signal transmission. However, at present, the transmittance of vehicle window glass for infrared light is low, which is not enough to meet the operation requirements of the information collection system in intelligent driving and other fields.

Based on this, the present disclosure provides a vehicle window glass. The vehicle window glass of the present disclosure is applied to a vehicle, and when 905 nm lidar is installed in the vehicle, the usage requirements of the lidar in the field of vehicle autonomous driving can be met.

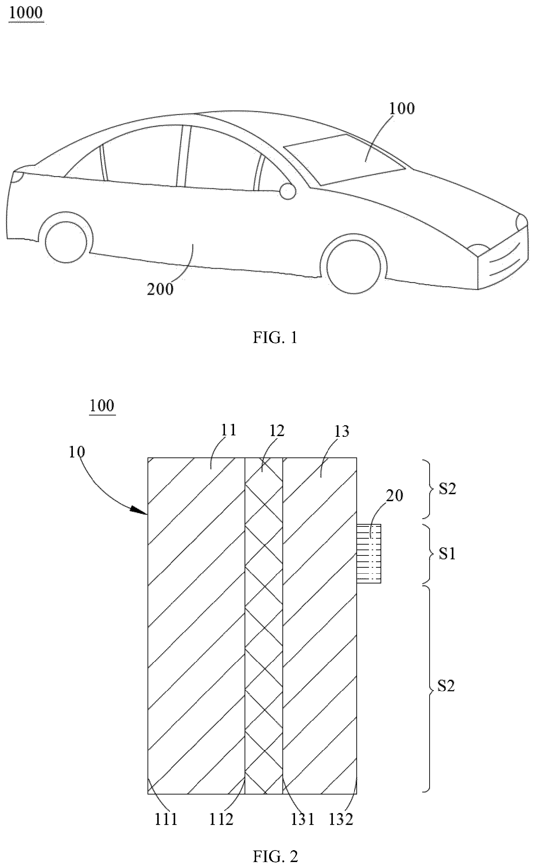

Referring to FIG 1, a vehicle 1000 includes a vehicle window glass 100 and a vehicle body 200, and the vehicle window glass 100 is connected to the vehicle body 200. The vehicle window glass 100 may be, but is not limited to, a front windshield, a side window glass, a rear windshield, a sunroof glass, and the like of the vehicle 1000. In embodiments of the present disclosure, for illustrative purpose, the vehicle window glass 100 is a front windshield.

Reference is made to FIG. 2, and the vehicle window glass 100 includes a laminated glass 10 and an anti-reflection film 20. The laminated glass 10 includes an outer glass pane 11, an intermediate layer 12, and an inner glass pane 13, and the intermediate layer 12 is laminated between the outer glass pane 11 and the inner glass pane 13. The outer glass pane 11has a first surface 111 and a second surface 112 opposite to the first surface 111, and the first surface 111 faces towards the outside of the vehicle 1000 and serves as an outer surface of the vehicle window glass 100. The second surface 112 faces the intermediate layer 12. The inner glass pane 13 has a third surface 131 and a fourth surface 132 opposite to the third surface 131, the third surface 131 faces the intermediate layer 12, and the fourth surface 132 faces towards the interior of the vehicle 1000 and serves as an inner surface of the vehicle window glass 100. In this embodiment, the intermediate layer 12 is connected to the second surface 112 and the third surface 131, the anti-reflection film 20 is laminated on the fourth surface 132 of the inner glass pane 13, and the area of the anti-reflection film 20 only needs to allow optical signals of the lidar to pass through.

It may be noted that, the laminated glass 10 may be in a flat-plate shape, or the laminated glass 10 may be in a curved-surface or a cambered-surface shape. The shape of the laminated glass 10 is not limited to shapes described above, and may be any shape that satisfies the usage requirements of the vehicle window glass 100. The shape of the laminated glass 10 is not limited in the present disclosure.

At least one of the outer glass pane 11 and the inner glass pane 13 has a transmittance of at least 91% for light in a wavelength range of 850 nm -1550 nm, and may use ultra-clear float glass. In an embodiment, both the outer glass pane 11 and the inner glass pane 13 are ultra clear float glass. The ultra-clear float glass is beneficial to improving the transmittance of the vehicle window glass 100 for infrared light with a wavelength of 905 nm emitted and received by the lidar. The thickness of the outer glass pane 11 is *w1*, and the thickness of the inner glass pane 13 is *w2*, where *w1* is greater than or equal to *w2*. In an embodiment, *w1* is greater than twice *w2*. In still another embodiment, *w1* is greater than 2.5 times of*w2*.

Exemplarily, the thickness *w1* of the outer glass pane 11 is 3.2 mm, and the thickness *w2* of the inner glass pane 13 is 1.2 mm. Because the outer glass pane 11 needs high durability and impact resistance against external obstacles, the outer glass pane 11 is preferably thick glass. In order to reduce the absorption of infrared light by the inner glass pane 13, the thickness of the inner glass pane 13 is relatively small. In order to meet the requirements of glass strength, the inner glass pane 13 can be tempered to improve the strength, so that the absorption of infrared light is reduced as far as possible on the basis of sufficient strength. At the same time, the requirements of lightweight are met as far as possible, and the total thickness of the inner and outer glass panes is reduced.

In this embodiment, the intermediate layer 12 is a thermoplastic polymer layer for bonding the outer glass pane 11 and the inner glass pane 13 to form a sandwich structure. The material of the intermediate layer 12 may be selected from polyvinyl butyral (PVB), polyolefin (POE), ethylene vinyl acetate copolymer (EVA), polyurethane (PU), etc, and is preferably PVB. By using PVB, propagation of noise can be effectively suppressed, so that the laminated glass 10 has the effect of sound insulation.

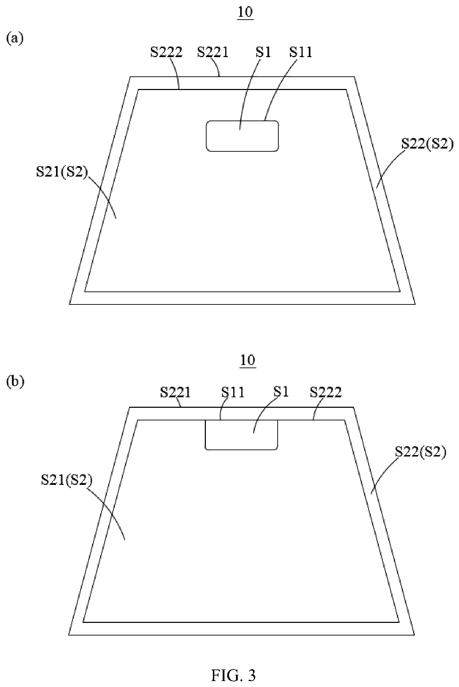

Reference is made to FIG. 3, in this embodiment, the vehicle window glass 100 further includes an information collection region S1 and a non-information-collection region S2, where the information collection region S1 and the non-information-collection region S2 do not overlap. The information collection region S1 is used for providing a signal transmission region for signal collection of an information collection system (not illustrated). When the vehicle window glass 100 is mounted on the vehicle 1000, the information collection system is disposed inside the vehicle 1000, and signals emitted and/or received by the information collection system all pass through the information collection region S1 of the vehicle window glass 100. The non-information-collection region S2 includes a visual field region S21 and a shielding region S22. The visual field region S21 is a transparent region, allowing light transmission between the inside and outside and serving as a vehicle window. The shielding region S22 is used for preventing visible light from passing through the laminated glass 10. In other embodiments, the visual field region S21 may also be partially used for a head up display (HUD), that is, the visual field region S21 is used as a visual field region of the HUD to display information such as traveling speed, dynamic navigation, and mall information, and the shielding region S22 may also be used for aesthetics only. The present disclosure does not limit the use of the non-information-collection region S2.

In embodiments of the present disclosure, the information collection region S1, the visual field region S21, and the shielding region S22 are not overlapped. In an embodiment, the information collection region S1 is located in the visual field region S21, the visual field region S21 is located outside the information collection region S1, the visual field region S21 surrounds the periphery of the information collection region S1 and completely surrounds the information collection region S1, and the shape of visual field region S21 matches the shape of the laminated glass 10. The shielding region S22 is in the shape of an annular frame, and the shielding region S22 surrounds a peripheral side of the visual field region S21. An outer side S221 of the shielding region S22 is an outer side of the laminated glass 10, and an inner side S222 of the shielding region S22 is connected to the peripheral side of the visual field region S21. The side S11 of the information collection region S1 is spaced apart from the inner side S222 of the shielding region S22.

The information collection region S1 is spaced apart from the shielding region S22. For example, reference is made to FIG. 3 which is a schematic planar structural view of the vehicle window glass 100, in a direction perpendicular to the thickness direction. The information collection region S1 may be disposed at an edge of the shielding region S22 close to the middle of the vehicle window glass 100, and the information collection region S1 may extend from an edge of the shielding region S22 close to the vehicle roof to the middle of the vehicle window glass 100.

The shape of the information collection region S1 may also be a triangle, a pentagon, a hexagon, etc., and the shielding region S22 may also be of other shapes. The visual field region S21 and the information collection region S1 may be in other positional relationships, and the visual field region S21 may be in other shapes. The present disclosure does not limit the positions and shapes of the information collection region S1 and the visual field region S21.

Referring to Figs 2 and 3 in combination, the anti-reflection film 20 is laminated on the fourth surface 132 of the inner glass pane 13. Specifically, the anti-reflection film 20 is disposed at a position on the laminated glass pane 10 corresponding to the information collection region S1. In the thickness direction of the laminated glass 10, the projection of the anti-reflection film 20 on the information collection region S1 covers the information collection region S1. That is, the orthographic projection of the anti-reflection film 20 on the laminated glass 10 at least completely overlaps with the information collection region S1 (dimensions of the anti-reflection film 20 in both the width direction and the length direction of the anti-reflection film 20 are at least equal to the width and length dimensions of the information collection region S1). By providing the anti-reflection film 20 on the fourth surface 132 of the inner glass pane 13, the reflection of infrared light in a wavelength range of 900 nm to 1000 nm by the vehicle window glass 100 can be reduced, and the transmittance of infrared light in the information collection region S1 of the laminated glass 10 can be improved. In this embodiment, the transmittance of infrared light, in a wavelength range of 900 nm to 1000 nm and incident at an incident angle of 60° to 70°, in the information collection region S1 is greater than or equal to 75%. In one embodiment, the transmittance of infrared light, in a wavelength range of 900 nm to 1000 nm and incident at an incident angle of 60° to 70°, in the information collection region S1 is 77%, or the transmittance of infrared light, in a wavelength range of 900nm to 1000 nm and incident at an incident angle of 60° to 70°, in the information collection region S1 is 79.5%. In this embodiment, the anti-reflection film 20 may be directly deposited on the fourth surface 132 of the inner glass pane 13 though magnetron sputtering, or through a continuous vertical film-coating machine or a horizontal film-coating machine, and specifically, a continuous vertical film-coating machine may be used. In other embodiments, the anti-reflection film 20 may be formed by coating or the like, or the anti-reflection film 20 may be adhered to the fourth surface 132 of the inner glass pane 13 through a substrate.

The anti-reflection film 20 includes multiple high refractive index layers and multiple low refractive index layers which are stacked. One low refractive index layer is stacked between every two adjacent high refractive index layers; and one high refractive index layer is stacked between every two adjacent low refractive index layers. Specifically, the number of layers of the anti-reflection film 20 is an even number, and from the fourth surface 132 of the inner glass pane 13, in the thickness direction of the laminated glass 10, odd-numbered layers are high refractive index layers, and even-numbered layers are low refractive index layers. The layer in contact with the fourth surface 132 of the inner glass pane 13 is a high refractive index layer, and the layer farthest from the fourth surface 132 is a low refractive index layer. By alternately stacking a high refractive index layer and a low refractive index layer, light is reflected at a contact interface from the low refractive index layer to the high refractive index layer, and multiple reflections realize surface anti-reflection and glare reduction.

The number of the film layers of the anti-reflection film 20 is an even number greater than or equal to 8, for example, the number of the film layers of the anti-reflection film 20 may be 8, 10, 12, 14, 16, or 18. In order to improve the anti-reflection effect of the anti-reflection film 20, the anti-reflection film 20 needs to have multiple film layers. As the number of film layers of the anti-reflection film 20 increases, the fixed absorption of infrared light by the anti-reflection film 20 also increases. When the number of film layers of the anti-reflection film 20 increases to a certain value, the transmittance of infrared light in a wavelength range of 900 nm to 1000 nm in the information collection region S1 reaches a maximum value. As the number of film layers continues to increase, the transmittance of infrared light in the information collection region S1 maintains the maximum value or is reduced. Considering the anti-reflection effect and the production cost, in this embodiment, the number of the film layers of the anti-reflection film 20 is preferably 10, 12, or 14.

A total thickness of the anti-reflection film 20 may be 400 nm to 2500 nm. In an embodiment, the total thickness of the anti-reflection film 20 is 740 nm to 1750 nm. In another embodiment, the total thickness of the anti-reflection film 20 is 1100 nm to 1300 nm. Each high refractive index layer has a thickness of 20 nm to 100 nm. In the thickness direction of the laminated glass 10, the multiple low refractive index layers except a low refractive index layer farthest from the fourth surface 132 of the inner glass pane 13 each have a thickness of 85 nm to 150nm. A total thickness of the multiple low refractive index layers is 400 nm to 1700 nm. In one embodiment, the total thickness of the multiple low refractive index layers is 600 nm to 1380 nm. A total thickness of the multiple high refractive index layers is 80 nm to 600 nm. Specifically, a ratio of the total thickness of the multiple high refractive index layers to the total thickness of the multiple low refractive index layers is 0.1 to 0.4. For example, a ratio of the total thickness of the multiple high refractive index layers to the total thickness of the multiple low refractive index layers is 0.2 to 0.3. The multiple high refractive index layers include a high refractive index layer with the largest thickness, and the multiple low refractive index layers include a low refractive index layer with the smallest thickness. The low refractive index layer with the smallest thickness has a thickness *d1,* the high refractive index layer with the largest thickness has a thickness *d2,* and *d1* is greater than 1.2 times of *d2.* In one embodiment, *d1* is greater than 1.5 times of *d2.* In one embodiment, *d1* is greater than 1.8 times of *d2.* In one embodiment, *d1* is greater than 2.0 times of *d2.* In one embodiment, *d1* is greater than 2.5 times of *d2.* The thickness of any one low refractive index layer is *d3,* and the thickness of any adjacent high refractive index layer is *d4, d3* being greater than 1.5 times of *d4.* In one embodiment, *d3* is greater than 1.7 times of *d4.* In one embodiment, *d3* is greater than 1.9 times of *d4.* In one embodiment, *d3* is greater than 2.1 times of *d4.* In in one embodiment, *d3* is greater than 2.3 times of *d4.* In one embodiment, *d3* is greater than 2.5 times of *d4.* In one embodiment, *d3* is greater than 2.7 times of *d4.* The anti-reflection film 20 provided in the present disclosure enables the number of refraction times of light in the anti-reflection film 20 to be relatively large, and in conjunction with the setting of the number of layers and the thickness, the reflectivity of infrared light in a wavelength range of 900nm to 1000 nm can be reduced, so that the transmittance of infrared light satisfies usage requirements.

Specifically, when the number of film layers is 8, the total thickness of the anti-reflection film 20 is 660 nm to 1070 nm, the total thickness of the multiple high refractive index layers is 130 nm to 300 nm, and the total thickness of the multiple low refractive index layers is 530 nm to 770 nm. When the number of film layers is 10, the total thickness of the anti-reflection film 20 is 780 nm to 1300 nm, the total thickness of the multiple high refractive index layers is 160 nm to 380 nm, and the total thickness of the multiple low refractive index layers is 630 nm to 920 nm. When the number of film layers is 12, the total thickness of the anti-reflection film 20 is 920 nm to 1510 nm, the total thickness of the multiple high refractive index layers is 190 nm to 450 nm, and the total thickness of the multiple low refractive index layers is 730 nm to 1060 nm. When the number of film layers is 14, the total thickness of the anti-reflection film 20 is 1060 nm to 1720 nm, the total thickness of the multiple high refractive index layers is 230 nm to 520 nm, and the total thickness of the multiple low refractive index layers is 830 nm to 1200 nm. When the number of film layers is 16, the total thickness of the anti-reflection film 20 is 1190 nm to 1950 nm, the total thickness of the multiple high refractive index layers is 260 nm to 600 nm, and the total thickness of the multiple low refractive index layers is 930 nm to 1350 m. When the number of film layers is 18, the total thickness of the anti-reflection film 20 is from 1310 nm to 2180 nm, the total thickness of the multiple high refractive index layers is from 290 nm to 680 nm, and the total thickness of the multiple low refractive index layers is from 1020 nm to 1500 nm.

An angle-dependent color measurement is performed on the information collection region S1 provided with the anti-reflection film 20. Visible light (380 nm to 780 nm) is irradiated from one side of the first surface 111 of the outer glass pane 11 to the information collection region S1, with an incident angle of 60° to 70°. According to international commission on illumination (CIE) Lab color model (a color model published by CIE in 1976), a reflected color of the information collection region S1 for visible light has a value of *L* of 84 to 92 (including endpoint values 84 and 92), a value of *a* of 7 to 11 (including endpoint values 7 and 11), and a value of *b* of 33 to 40 (including endpoint values 33 and 40). The value of *L* denotes a lightness value, the value of *a* denotes a redness-greenness chromaticity value, and the value of *b* denotes a blueness-yellowness chromaticity value. Therefore, the information collection region S1 observed from the outside of the vehicle is gold-yellow, and the anti-reflection film 20 can shield the information collection region S1, improving the aesthetic appearance of the vehicle.

The refractive index of a high refractive index layer is 1.9 to 3.5 (including endpoint values of 1.9 and 3.5), the refractive index of a low refractive index layer is 1.4 to 1.9 (including endpoint values of 1.4 and 1.9), and a difference between the refractive index of the high refractive index layer and the refractive index of the low refractive index layer adjacent to the high refractive index layer is greater than or equal to 0.3. Further, the difference between the refractive index of the high refractive index layer and the refractive index of the low refractive index layer adjacent to the high refractive index layer is greater than or equal to 0.4, or the difference between the refractive index of the high refractive index layer and the refractive index of the low refractive index layer adjacent to the high refractive index layer is greater than or equal to 0.5.

The material of a high refractive index layer includes at least one member selected from the group consisting of Si, FeOₓ, NbOₓ, SiNₓ, ZrOₓ, TiOₓ, TiNₓ, MoOₓ, and TaOₓ. The material of the low refractive index layer includes at least one member selected from the group consisting of SiOₓ, MgFₓ, AlOₓ, and AlSiOₓ. It may be noted that, the multiple high refractive index layers of the anti-reflection film 20 may be made of a material with a relatively high refractive index, so that the anti-reflection effect can be achieved with fewer film layers. One or more materials with a refractive index of 1.4 to 1.9 can be used for the multiple low refractive index layers, as long as the anti-reflection film 20 observed from the outside of the vehicle is gold-yellow, and the anti-reflection effect of the anti-reflection film 20 can satisfy the requirements in the field of autonomous driving.

In the thickness direction of the laminated glass 10, the low refractive index layer farthest from the fourth surface 132 of the inner glass pane 13, that is, the outermost film layer of the anti-reflection film 20 is made from any one of oxides such as SiOₓ, AlOₓ, and AlSiOₓ. The low refractive index layer has a thickness greater than 200 nm. In one embodiment, the layer has a thickness greater than 250 nm. In another embodiment, the layer has a thickness greater than 300 nm. Since the material of the low refractive index layer farthest from the fourth surface 132 is an oxide material, and the layer has a larger thickness, the anti-reflection film 20 has better wear resistance and corrosion resistance.

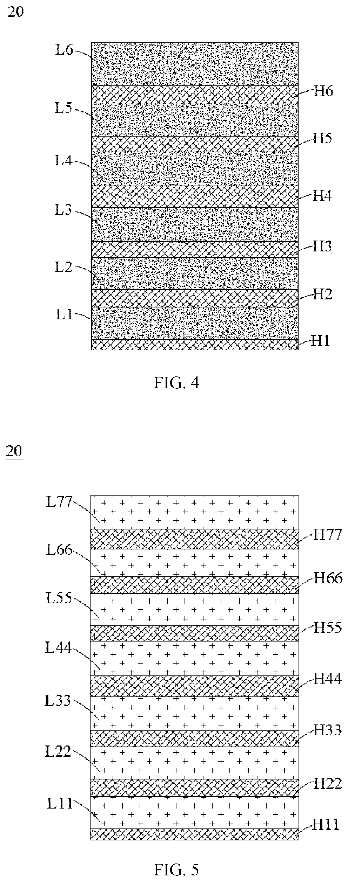

Reference is made to FIG. 4 in conjunction with Table 1, and FIG. 4 is a schematic structural view of an anti-reflection film 20 of a vehicle window glass 100 in a first embodiment according to the present disclosure. The number of film layers of the anti-reflection film 20 of the present embodiment is 12, in which there are six high refractive index layers and six low refractive index layers. The high refractive index layers are all made from Si₃N₄, and the refractive index of Si₃N₄ is 1.9. The low refractive index layers are all made from SiO₂, and the refractive index of SiO₂ is 1.5. Staring from the fourth surface 132 of the inner glass pane 13, in the thickness direction of the anti-reflection film 20, the first layer is a high refractive index layer H1 with a thickness of 47 nm, the second layer is a low refractive index layer L1 with a thickness of 128 nm, the third layer is a high refractive index layer H2 with a thickness of 74 nm, the fourth layer is a low refractive index layer L2 with a thickness of 122 nm, the fifth layer is a high refractive index layer H3 with a thickness of 64 nm, the sixth layer is a low refractive index layer L3 with a thickness of 146 nm, the seventh layer is a high refractive index layer H4 with a thickness of 94 nm, the eighth layer is a low refractive index layer L4 with a thickness of 142 nm, the ninth layer is a high refractive index layer H5 with a thickness of 66 nm, the tenth layer is a low refractive index layer L5 with a thickness of 121 nm, the eleventh layer is a high refractive index layer H6 with a thickness of 74 nm, and the twelfth layer is a low refractive index layer L6 with a thickness of 306 nm.

**Table 1 Structural parameters of the anti-reflection film in the first embodiment**

| Film | Material | thickness(nm) |
|---|---|---|
| H1 | Si₃N₄ | 47 |
| L1 | SiO₂ | 128 |
| H2 | Si₃N₄ | 74 |
| L2 | SiO₂ | 122 |
| H3 | Si₃N₄ | 64 |
| L3 | SiO₂ | 146 |
| H4 | Si₃N₄ | 94 |
| L4 | SiO₂ | 142 |
| H5 | Si₃N₄ | 66 |
| L5 | SiO₂ | 121 |
| H6 | Si₃N₄ | 74 |
| L6 | SiO₂ | 306 |

In this embodiment, the total thickness of the anti-reflection film 20 is 1384nm, the thickness of each high refractive index layer is 47nm to 94nm, and the thickness of each low refractive index layer except the low refractive index layer L6 is 121 to 146nm. The total thickness of the six high refractive index layers is 419 nm, the total thickness of the six low refractive index layers is 965 nm, and the ratio of the total thickness of the high refractive index layers to the total thickness of the low refractive index layers is 0.43. The thickness of the high refractive index layer H4 is the largest and is 94 nm, the thickness of the low refractive index layer L5 is the smallest and is 121 nm, and the thickness of the low refractive index layer L5 is more than 1.2 times of the thickness of the high refractive index layer H4. Each low refractive index layer has a thickness greater than 1.5 times of the thickness of the high refractive index layer adjacent thereto. For example, the low refractive index layer L4 has a thickness of 142 nm, the high refractive index layer H4 adjacent thereto has a thickness of 94 nm, the high refractive index layer H5 adjacent thereto has a thickness of 66 nm, and the low refractive index layer L4 has the thickness greater than 1.5 times of the thickness of each of the high refractive index layer H4 and the high refractive index layer H5.

In this embodiment, as the number of the film layers of the anti-reflection film 20 is increased, the transmittance of infrared light in the information collection region S1 is gradually increased. When the number of film layers of the anti-reflection film reaches 12, the transmittance of infrared light in a wavelength range of 900nm to1000 nm in the information collection region S1 reaches a maximum of 79.5%.When the number of the film layers of the anti-reflection film 20 is greater than 12, for example, the number of the film layers of the anti-reflection film 20 is 14, the transmittance of infrared light in a wavelength range of 900nm to 1000 nm in the information collection region S1 is close to that when the number of the film layers is 12. When the number of the film layers of the anti-reflection film 20 is further increased, the transmittance of infrared light in the information collection region S1 is not obviously increased, or even may be reduced. Therefore, in consideration of the anti-reflection effect and the production cost, in an embodiment, the number of the film layers of the anti-reflection film 20 is preferably 12.

When the anti-reflection film 20 in this embodiment is not used, the transmittance of infrared light, with a wavelength of 905 nm and incident at an incident angle of 70°, in the information collection region S1 of the laminated glass 10 is about 67%. When the anti-reflection film 20 in the present embodiment is used, the transmittance of infrared light, with a wavelength of 905 nm and incident at an incident angle of 60° to 70°, in the information collection region S1 of the laminated glass 10 reaches 79.5%. In this embodiment, a reflected color of the information collection region S1 for visible light incident at an incident angle of 60° to 70° has a value of *L* of 88.1, a value of *a* of 9.6, and a value of *b* of 36.3.

Reference is made to FIG. 5 which is a schematic view of a specific structure of the anti-reflection film 20 of the second embodiment. Different from the first embodiment in FIG. 4, the number of layers of the anti-reflection film 20 illustrated in FIG. 5 is 14, in which there are seven high refractive index layers and seven low refractive index layers. Each low refractive index layer is made from Al₂O₃, and the refractive index of Al₂O₃ is 1.765. Each high refractive index layer is made from Si, and the refractive index of Si is 3.2. Starting from the fourth surface 132 of the inner glass pane 13, in the thickness direction of the anti-reflection film 20, the first layer is a high refractive index layer H11 with a thickness of 26 nm, the second layer is a low refractive index layer L11 with a thickness of 107 nm, the third layer is a high refractive index layer H22 with a thickness of 40 nm, the fourth layer is a low refractive index layer L22 with a thickness of 99 nm, the fifth layer is a high refractive index layer H33 with a thickness of 39 nm, the sixth layer is a low refractive index layer L33 with a thickness of 123 nm, the seventh layer is a high refractive index layer H44 with a thickness of 42 nm, the eighth layer is a low refractive index layer L44 with a thickness of 118 nm, the ninth layer is a high refractive index layer H55 with a thickness of 30 nm, the tenth layer is a low refractive index layer L55 with a thickness of 95 nm, the eleventh layer is a high refractive index layer H66 with a thickness of 28 nm, the twelfth layer is a low refractive index layer L66 with a thickness of 89 nm, the thirteenth layer is a high refractive index layer H77 with a thickness of 48 nm, and the fourteenth layer is a low refractive index layer L77 with a thickness of 272 nm.

**Table 2 Structural parameters of the anti-reflection film in the second embodiment**

| film | Material | thickness(nm) |
|---|---|---|
| H11 | Si | 26 |
| L11 | Al₂O₃ | 107 |
| H22 | Si | 40 |
| L22 | Al₂O₃ | 99 |
| H33 | Si | 39 |
| L33 | Al₂O₃ | 123 |
| H44 | Si | 42 |
| L44 | Al₂O₃ | 118 |
| H55 | Si | 30 |
| L55 | Al₂O₃ | 95 |
| H66 | Si | 28 |
| L66 | Al₂O₃ | 89 |
| H77 | Si | 48 |
| L77 | Al₂O₃ | 272 |

In this embodiment, the total thickness of the anti-reflection film 20 is 1156 nm, the thickness of each high refractive index layer is 26 nm to 48 nm, and the thickness of each low refractive index layer except the low refractive index layer L77 is 89 nm to 123 nm. The total thickness of the seven high refractive index layers was 253 nm, the total thickness of the seven low refractive index layers was 903 nm, and the ratio of the total thickness of the high refractive index layers to the total thickness of the low refractive index layers was 0.28. The high refractive index layer H77 is the thickest, measuring 48 nm, the low refractive index layer L66 is the thinnest, measuring 89 nm, and the thickness of the low refractive index layer L66 is greater than 1.2 times of the thickness of the high refractive index layer H77. Each low refractive index layer has a thickness greater than 1.5 times of the thickness of the high refractive index layer adjacent thereto. For example, the low refractive index layer L66 has a thickness of 89 nm, the high refractive index layer H66 adjacent thereto has a thickness of 28 nm, the high refractive index layer H77 adjacent thereto has a thickness of 48 nm, and the low refractive index layer L3 has a thickness greater than 1.5 times of the thickness of each of the high refractive index layer H3 and the high refractive index layer H4.

When the anti-reflection film 20 in this embodiment is not used, the transmittance of infrared light, with a wavelength of 905 nm and incident at an incident angle of 70°, in the information collection region S1 of the laminated glass 10 is about 67%. When the anti-reflection film 20 in the present embodiment is used, the transmittance of infrared light, with a wavelength of 905 nm and incident at an incident angle of 60° to 70°, in the information collection region S1 of the laminated glass 10 reaches 79.1%. In this embodiment, a reflected color of the information collection region S1 for visible light incident at an incident angle of 60° to 70° has a value of *L* of 86.8, a value of *a* of 9.1, and a value of *b* of 35.5.

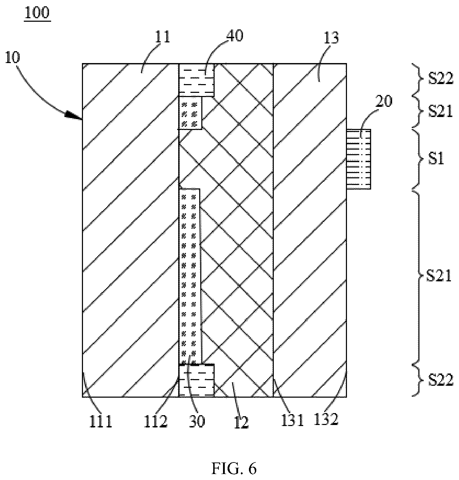

Reference is made to FIG. 6, and the vehicle window glass 100 in the present disclosure further includes a heat insulation film 30. The heat insulation film 30 is disposed on the third surface 131 of the inner glass pane 13 and/or the second surface 112 of the outer glass pane 11, avoiding the information collection region S1 of the vehicle window glass 100. In other words, the heat insulation film 30 is sandwiched between the outer glass pane 11 and the inner glass pane 13. Specifically, the heat insulation film 30 is disposed at a position on the laminated glass 10 corresponding to the visual field region S21. In the thickness direction of the laminated glass 10, the orthographic projection of the heat insulation film 30 on the laminated glass 10 completely overlaps with the visual field region S21 (dimensions of the heat insulation film 30 in both the width direction and the length direction of the heat insulation film 30 are equal to the width and length dimensions of the visual field region S21). The heat insulation film 30 can reflect infrared light, so as to achieve an insulation and sun-proof effect of the visual field region S21. In other embodiments, in the thickness direction of the laminated glass 10, the orthographic projection of the heat insulation film 30 on the laminated glass 10 may also partially overlap with the visual field region S21 (dimensions of the heat insulation film 30 in both the width direction and the length direction of the heat insulation film 30 are less than the width and length dimensions of the visual field region S21).

In the present disclosure, the heat insulation film 30 is a functional metal layer, and the functional metal layer includes one metal layer and two dielectric layers, and the metal layer is disposed between the two dielectric layers. The material of the metal layer is Ag, and the material of the dielectric layer is ZnSnOₓ. In other embodiments, the functional metal layer may include multiple metal layers, and each metal layer is disposed between two adjacent dielectric layers. In the present disclosure, "a plurality of" or "multiple" refers to two or more. On one hand, the dielectric layer has the function of protecting the metal layer and preventing the metal layer from being oxidized; and on the other hand, the dielectric layer can also adjust the optical properties, mechanical properties, and reflected color of the heat insulation film. The material of the metal layer may be a metal or a metal alloy of at least one element selected from the group consisting of Ag, Au, Cu, Al, and Pt. The material of the dielectric layer may be at least one of nitride, oxide, or oxynitride of an element selected from the group consisting of zinc, Zn, Sn, Ti, Si, Al, Ni, Cr, Nb, Mg, Zr, Ga, Y, In, Sb, V, and Ta, and alloys thereof.

In order to ensure that the visual field region S21 has a high transmittance, the heat insulation film 30 may be disposed on either the second surface 112 of the outer glass pane 11 or the third surface 131 of the inner glass pane 13. The heat insulation film 30 may be a functional metal layer, a transparent conductive oxide coating, or an infrared absorbing layer, and the material of the heat insulation film 30 is not limited in the present disclosure.

The laminated glass 10 is further provided with a shielding layer 40, and the shielding layer 40 is laminated on a periphery of the second surface 112 of the outer glass pane 11 and/or the fourth surface 132 of the inner glass pane 13. Specifically, the shielding layer 40 is disposed at a position on the laminated glass 10 corresponding to the shielding region S22. In the thickness direction of the laminated glass 10, the orthographic projection of the shielding layer 40 on the laminated glass 10 completely overlaps the shielding region S22 (dimensions of the shielding layer 40 in both the width direction and the length direction of the shielding layer 40 are equal to the width and length dimensions of the shielding region S22). The shielding layer 40 avoids the information collection region S1 and the visual field region S21 on the laminated glass 10. The shielding layer 40 is typically made from ink and is used to shield and protect components inside the vehicle 1000. The shielding layer 40 can play a role of preventing ultraviolet rays, preventing the components inside the vehicle 1000 from being aged and damaged by direct sunlight, so as to improve the service life of the components inside the vehicle 1000. In addition, the shielding layer 40 can also shield the components inside the vehicle 1000 to ensure the overall beauty observed from outside. In other embodiments, in the thickness direction of the laminated glass 10, the orthographic projection of the shielding layer 40 on the laminated glass 10 may partially overlap the shielding region S22 (dimensions of the shielding layer 40 in both the width direction and the length direction of the shielding layer 40 are less than the width and length dimensions of the shielding region S22).

The embodiments of the present disclosure have been described in detail above, and the principles and implementations of the present disclosure have been described herein with specific examples, and the description of the above embodiments is only for helping to understand the methods and core ideas of the present disclosure. Meanwhile, those skilled in the art may change the specific embodiments and the scope of application according to the ideas of the present disclosure, and in summary, the contents of the present specification should not be construed as limiting the present disclosure.

## Claims

1. A vehicle window glass, comprising a laminated glass and an information collection region, wherein the laminated glass comprises an outer glass pane, an intermediate layer, and an inner glass pane, the intermediate layer is sandwiched between the outer glass pane and the inner glass pane, the outer glass pane has a first surface and a second surface opposite to the first surface, the second surface faces the intermediate layer, the inner glass pane has a third surface and a fourth surface opposite to the second surface, and the third surface faces the intermediate layer;
wherein an anti-reflection film is disposed on the fourth surface of the inner glass pane, and in a thickness direction of the laminated glass, a projection of the anti-reflection film on the information collection region covers the information collection region; the anti-reflection film comprises a plurality of high refractive index layers and a plurality of low refractive index layers which are stacked, one low refractive index layer is stacked between every two adjacent high refractive index layers, and one high refractive index layer is stacked between every two adjacent low refractive index layers; and a high refractive index layer is in contact with the fourth surface of the inner glass pane, and a number of film layers of the anti-reflection film is an even number and greater than or equal to 8.

2. The vehicle window glass of claim 1, wherein as measured from one side of the first surface, a reflected color of the information collection region for visible light has a value of *L* of 84 to 92, a value of *a* of 7 to 11, and a value of *b* of 33 to 40, wherein the value of *L* denotes a lightness value, the value of *a* denotes a redness-greenness chromaticity value, and the value of *b* denotes a blueness-yellowness chromaticity value.

3. The vehicle window glass of claim 1, wherein a total thickness of the anti-reflection film is 400 nm to 2500 nm.

4. The vehicle window glass of claim 1, wherein each of the plurality of high refractive index layers has a thickness of 20 nm to 100 nm.

5. The vehicle window glass of claim 1, wherein in the thickness direction of the laminated glass, the multiple low refractive index layers except a low refractive index layer farthest from the fourth surface of the inner glass pane each have a thickness of 85 nm to 150nm.

6. The vehicle window glass of claim 5, wherein a total thickness of the plurality of low refractive index layers is 400 nm to 1700 nm.

7. The vehicle window glass of claim 6, wherein a ratio of a total thickness of the plurality of high refractive index layers to the total thickness of the plurality of low refractive index layers is 0.1 to 0.4.

8. The vehicle window glass of any one of claims 1 to 7, wherein the plurality of high refractive index layers comprise a high refractive index layer with a largest thickness, the plurality of low refractive index layers comprise a low refractive index layer with a smallest thickness, and the low refractive index layer with the smallest thickness has a thickness greater than 1.2 times of that of the high refractive index layer with the largest thickness.

9. The vehicle window glass of any one of claims 1 to 7, wherein a thickness of any low refractive index layer is greater than 1.5 times of that of any adjacent high refractive index layer.

10. The vehicle window glass of claim 1, wherein the plurality of high refractive index layers each have a refractive index of 1.9 to 3.5, the plurality of low refractive index layers each have a refractive index of 1.4 to 1.9, and a difference between a refractive index of a high refractive index layer and a refractive index of a low refractive index layer adjacent to the high refractive index is greater than or equal to 0.3.

11. The vehicle window glass of claim 10, wherein a material of each of the plurality of high refractive index layers includes at least one member selected from the group consisting of Si, FeOₓ, NbOₓ, SiNₓ, ZrOₓ, TiOₓ, TiNₓ, MoOₓ, and TaOₓ, and a material of each of the plurality of low refractive index layers includes at least one member selected from the group SiOₓ, MgFₓ, AlOₓ, and AlSiOₓ.

12. The vehicle window glass of claim 11, wherein in the thickness direction of the laminated glass, a material of a low refractive index layer farthest away from the fourth surface of the inner glass pane is an oxide, and a thickness of the low refractive index layer farthest away from the fourth surface of the inner glass pane is greater than 200 nm.

13. The vehicle window glass of claim 1, wherein the information collection region has a transmittance greater than or equal to 75% for infrared light in a wavelength range of 900 nm to 1000 nm and incident at an incident angle of 60° to 70°.

14. The vehicle window glass of claim 1, wherein at least one of the outer glass pane or the inner glass pane has a transmittance of at least 91% for light in a wavelength range of 850 nm to1550 nm.

15. The vehicle window glass of claim 1, wherein the anti-reflection film is deposited directly on the fourth surface of the inner glass pane.

16. The vehicle window glass of claim 1, wherein the anti-reflection film is adhered to the fourth surface of the inner glass pane through a substrate.

17. The vehicle window glass of claim 1, further comprising a heat insulation film, wherein the heat insulation film is disposed on the second surface of the outer glass pane and/or the third surface of the inner glass pane, avoiding the information collection region of the vehicle window glass.

18. The vehicle window glass of claim 1, further comprising a shielding layer, wherein the shielding layer is disposed on a periphery of the second surface of the outer glass pane and/or a periphery of the fourth surface of the inner glass pane, avoiding the information collection region of the vehicle window glass.

19. A vehicle, comprising a vehicle body and the vehicle window glass of any one of claims 1 to 18, and the vehicle window glass being connected to the vehicle body.

20. The vehicle of claim 19, further comprising an information collection system, wherein the information collection system is disposed inside the vehicle, and signals emitted and/or received by the information collection system all pass through the information collection region of the vehicle window glass.
